# EUROPÄISCHE PATENTSCHRIFT

(11) **EP 0 484 777 B1**
(45) Veröffentlichungstag und Bekanntmachung des Hinweises auf die Patenterteilung: **19.07.1995**
(21) Anmeldenummer: 91118317.6
(22) Anmeldetag: 28.10.1991
(51) Int. Cl.: F23G 7/00, F23G 7/06, F23D 17/00, F23D 14/66, F23L 7/00

(54) **Verfahren zur Stabilisierung eines Verbrennungsvorganges**
Method of stabilizing a combustion process
Procédé pour la stabilisation d'un processus de combustion

(30) Priorität: 09.11.1990 DE 4035604
(43) Veröffentlichungstag der Anmeldung: 13.05.1992
(73) Patentinhaber: BAYER AG, 51368 Leverkusen (DE)
(72) Erfinder: Capek, Karel, Dipl.-Ing., W-5060 Bergisch Gladbach 2 (DE); Kirchmann, Holger, Dr., W-5653 Leichlingen (DE); Schweitzer, Martin, Dipl.-Ing., W-5068 Odenthal (DE); Vaulont, Winfried, Dr., W-5000 Köln 80 (DE)

(56) Entgegenhaltungen:
- DE-A- 3 004 186
- DE-A- 3 446 788
- DE-A- 3 828 248
- US-A- 4 338 870

## Beschreibung

Die Erfindung geht aus von einem Verfahren zur Stabilisierung eines Verbrennungsvorganges, bei dem einer Flamme in einer Hauptbrennkammer neben dem Brenngas und der Verbrennungsluft gasförmige oder flüssige Rückstände mit geringem oder gar keinem Heizwert zugeführt werden.

Ein derartiges Verfahren ist aus Dokument DE-A-3 446 788 bekannt.

Unter "gasförmigen bzw. flüssigen Rückständen" werden in diesem Zusammenhang gasförmige oder flüssige Abfallstoffe verstanden, die durch Verbrennung entsorgt werden sollen. Eine Entsorgung von stickstoffhaltigen Rückständen wirft darüber hinaus das bekannte Problem von Stickoxid-Emissionen (NOₓ-Emission) auf.

Bei Druckänderungen im Feuerraum eines Brenners sowie schnellen Laständerungen reißt häufig die Flamme kurzzeitig bis zur Wiederzündung durch einen mitlaufenden Zündbrenner ab. Das Abreißen und Neuzünden der Flamme bedeutet eine starke Beeinträchtigung des Verbrennungsvorganges und hat einen erhöhten CO-Gehalt sowie Rußbildung zur Folge. Bei der Verbrennung von flüssigen Abfallstoffen können auch kurzzeitige Schwelprozesse auftreten, die zu einem hohen Anteil an unerwünschten Rauchgasbegleitstoffen führen. Die Grundlage aller weiteren, die Verbrennung verbessernden Maßnahmen ist daher zunächst eine unter allen Betriebsbedingungen stabilisierte Flamme am Brenner.

Nach dem Stand der Technik werden Brennerflammen, je nach Ausführung des Brenners und dessen Einsatzgebiet, in unterschiedlicher Weise stabilisiert, Häufig werden Staukörper in Form von Stauscheiben oder sogenannten Swirlern angewandt. Weit verbreitet sind auch drallstabilisierte Flammen (hauptsächlich bei gasförmigen Brennstoffen), deren Zündung durch rückgesaugtes, heißes Rauchgas aufrechterhalten wird. Bei flüssigem Brennstoff wird von einer Variante Gebrauch gemacht, die auf einem eingebauten, von heißen, rückgesaugten Rauchgasen umspülten Festkörper beruhen. Dieser Brenner-Festkörper hat die Aufgabe, den zerstäubten Brennstoff aufzubereiten und eine Vorreaktion mit dem Ziel durchzuführen, die Flammenhalterung und den Ausbrand zu verbessern. Ein Überblick zu den Konstruktionsmerkmalen und Einsatzgebieten von Industriegasbrennern wird in dem Artikel von D. Mundus et al., in Gas-Wärme-International, 37 (1988) 10, S. 509 bis 514, gegeben.

Die Schwierigkeit, eine Flamme zu stabilisieren, wächst mit fallendem Heizwert des Brennstoffes, mit Lastschwankungen bei der Aufarbeitung von Abfall-Brennstoffen, z.B. von Wasseremulsionen, und bei wechselnden Brennstoffqualitäten. Die daraus resultierenden Störeinflüsse und geeigneten Gegenmaßnahmen werden von B. Lenze et al., in VDI-Berichte, 645, S. 269 bis 297, beschrieben. Es ist allgemein bekannt, daß eine gut stabilisierte Flamme einen besseren Ausbrand aufweist als eine schlecht stabilisierte Flamme. Eine schlechte Stabilisierung äußert sich im allgemeinen in einer hör- und sichtbaren Pulsation der Flamme. Um bei heizwertarmen Flüssigbrennstoffen und Brennstoffen mit stark schwankendem Heizwert in einem weiten Durchsatzbereich eine Flammenstabilisierung zu erreichen, wird häufig von einer Fremdstabilisierung in Form einer dauernd brennenden Pilotflamme Gebrauch gemacht. Die Pilotflamme, die oft durch einen Leistungszündbrenner erzeugt wird, ist selbst äußerst zündstabil. Die Zündung eines z.B. zerstäubten, niederkalorischen Brennstoffes erfolgt in dem Teilbereich des Sprühstrahles, in dem der heiße Abgasstrahl auf den Sprühstrahl trifft. Durch das seitliche Auftreffen des heißen, sonst weitgehend inerten Gasstrahls aus dem Zündbrenner wird lokal die Verdampfung der Tropfen gefördert und im weiteren Strömungsverlauf die Mischung des verdampften Brennstoffes mit gewöhnlicher Luft als Sauerstoffträger bei ausreichend hoher Temperatur gezündet. Dabei wird vorausgesetzt, daß diese Mischung zündfähig ist. Nachteilig wirkt sich aus, daß der heiße Abgasstrahl selbst inert ist, wenn dem Leistungszündbrenner zur Erzielung maximaler Temperaturen Brenngas und Luft im stöchiometrischen Verhältnis zugeführt werden. Weiterhin ist von Nachteil, daß der normalerweise rotationssymmetrische Sprühstrahl nur in Teilbereichen gezündet wird. Bei schlecht brennbaren Stoffen erfolgt die Überzündung des gesamten Sprühstrahls erst mit größerer Entfernung weiter stromabwärts. Es ergibt sich eine schiefe Flamme, die nach der Zündung durch die Pilotflamme so lange zündstabil brennt, wie die Wärmefreisetzung in einem Kontrollvolumen ausreicht, um ein oder mehrere benachbarte Kontrollvolumina zu überzünden.

Bei den beschriebenen Flammeninstabilitäten und vor allem bei örtlich großen Turbulenzen in der Flamme besteht die Gefahr einer erhöhten Bildung von Stickoxiden mit entsprechend höheren NOₓ-Emissionen.

Ziel der Erfindung ist daher, unter erschwerten Betriebsbedingungen für eine erhöhte Flammenstabilisierung zu sorgen. Erschwerende Betriebsbedingungen sind dabei insbesondere:
- Stark wechselnder Druck in der Brennkammer aufgrund von Lastschwankungen bei der Verbrennung von gasförmigen oder flüssigen Abfallstoffen;
- die Verwendung von einem oder mehreren gasförmigen und/oder flüssigen Brennstoffen mit niedrigem oder stark variierendem Heizwert;
- Störungen durch vorübergehendes Einbringen flammeninhibierender Stoffe.

Ziel der Erfindung ist ferner die Reduzierung der NOₓ-Emission.

Die zur Erreichung dieser Ziele notwendige Stabilisierung des Verbrennungsvorganges wird erfindungsgemäß dadurch realisiert, daß das Brenngas so stark vorgeheizt wird, daß es mit einer Temperatur oberhalb seiner Zündtemperatur in die Hauptbrennkammer eintritt. Die hohe Zündstabilität wird also dadurch erreicht, daß das Brenngas in einem von der Hauptbrennkammer separaten Raum (Erhitzerkammer) so stark aufgeheizt wird, daß unmittelbar nach dem Austritt aus der Erhitzerkammer bei der Vermischung mit sauerstoffhaltigem Gas die thermische Reaktion erfolgt.

Die Aufheizung des Brenngases erfolgt zweckmäßig im direkten Kontakt mit den Rauchgasen eines in der Erhitzerkammer angeordneten Brenners. Das entstehende Brenngas/Rauchgas-Gemisch wird dann als Zündgas der Hauptbrennkammer zugeführt. Alternativ kann das Brenngas auch durch einen mit der Erhitzerkammer verbundenen Wärmetauscher geleitet werden (indirekte Aufheizung). Die Temperatur des vorgeheizten Brenngases bzw. Brenngas/Rauchgas-Gemisches (Zündgas) beim Eintritt in die Hauptbrennkammer soll mindestens 5 % über der Zündtemperatur liegen.

Zur Entsorgung von flüssigen Abfallstoffen wird der flüssige Rückstand in die Flamme der Hauptbrennkammer eingedüst und das Zündgas in Form von gerichteten Zündstrahlen in die verdüste Flüssigkeit eingeleitet. Die Einleitung erfolgt in vorteilhafter Weise rotationssymmetrisch über einen konzentrischen Kranz von Öffnungen, so daß die verdüste Flüssigkeit von den Gasstrahlen konzentrisch eingehüllt wird.

Bei der Verbrennung von stickstoffhaltigen Abfallstoffen wird der Brenner in der Erhitzerkammer vorteilhaft unterstöchiometrisch betrieben, so daß das Zündgas Kohlenmonoxid enthält. Die NOₓ-Reduzierung beruht dabei auf der kontrollierten Erzeugung und Verteilung von CO als Reduktionsmittel und der Erwärmung des Brenngases auf Temperaturen oberhalb des Zündpunktes. Eine Variante zur Reduzierung der NOₓ-Emission besteht darin, daß das Brenngas oder Brenngas/Rauchgas-Gemisch vor dem Eintritt in die Hauptbrennkammer katalytisch unter Abspaltung von Wasserstoff zersetzt wird, so daß an Stelle von CO Wasserstoff als Reduktionsmittel tritt. Zu diesem Zweck kann z.B. die Wand der Erhitzerkammer mit aktiven katalytischen Stoffen, wie Platin, Kohlenstoff, Metalloxiden ausgekleidet sein. Eine andere Möglichkeit besteht darin, den auf einem geeigneten Träger angeordneten Katalysator mit dem erhitzten Brenngas in Kontakt zu bringen.

Gemäß einer Weiterbildung der Erfindung ist ferner vorgesehen, daß ein sauerstoffhaltiges oder sauerstofffreies, nicht brennbares Reguliergas in die Erhitzerkammer eingespeist wird. Mit Hilfe dieses Reguliergases ist es möglich, die durchgesetzte Brenngasmenge in weiten Grenzen zu variieren und den jeweiligen Erfordernissen des Verbrennungsvorganges anzupassen.

Aufgrund der erfindungsgemäßen Maßnahmen wird in der Hauptbrennkammer eine im wesentlichen kompakte, stabil brennende, homogene Flamme erzeugt, wobei die nachfolgend angegebenen Vorteile zum Tragen kommen:
1. Der eingedüste Sprühstrahl eines flüssigen Abfallstoffes wird über den gesamten Umfang hinweg überzündet. Dadurch wird eine höhere Wärmeentbindung erreicht.
2. Auch niederkalorische Brennstoffe können sicher gezündet werden.
3. Die Zündung erfolgt bei einer relativ niedrigen Temperatur im Bereich einer relativ großen Zündzone ("sanfte" Zündung). Dadurch wird die Bildung von Temperaturspitzen und damit die Erzeugung von NOₓ auf thermischem Wege weitgehend unterbunden.
4. Das inhibierend wirkende Rauchgas wird nur in äußerst geringer Menge in die Zündzone eingetragen.
5. Das heiße Zündgas kann aufgeteilt werden und auf unterschiedliche Bereiche des zerstäubten Sprühstrahls gerichtet werden.
6. Das heiße Zündgas kühlt auf dem Weg bis zur Zündzone nicht ab, da an der Peripherie der Zündgasstrahlen durch Mischung mit der umgebenden Luft ein Teil der transportierten Wärmemenge entbunden wird.
7. Die Zündgasstrahlen sind aufgrund des hohen Temperaturunterschiedes zur Umgebung sehr stabil und haben damit eine große Reichweite.
8. Durch verhältnismäßig geringe Änderung der Durchsatzmenge kann eine relativ große Änderung des Energieeintrages in die Hauptbrennkammer bewirkt werden.
9. NOₓ-haltige Abluft oder stickstoffhaltiger Flüssigabfall kann bei entsprechender Nachrüstung bestehender Feuerungsanlagen ohne die sonst üblichen Sekundär-Maßnahmen zur NOₓ-Reduzierung entsorgt werden, wobei das erfindungsgemäße Konzept auch für Brenner mit kleiner Leistung geeignet ist.

Im folgenden wird die Erfindung anhand von Zeichnungen und Ausführungsbeispielen näher erläutert.

Es zeigen:
- Fig. 1: einen Brenner mit direkter Vorheizung des Zündgases und
- Fig. 2: einen Brenner mit vorgeschaltetem Wärmetauscher zur Erhitzung des Zündgases.

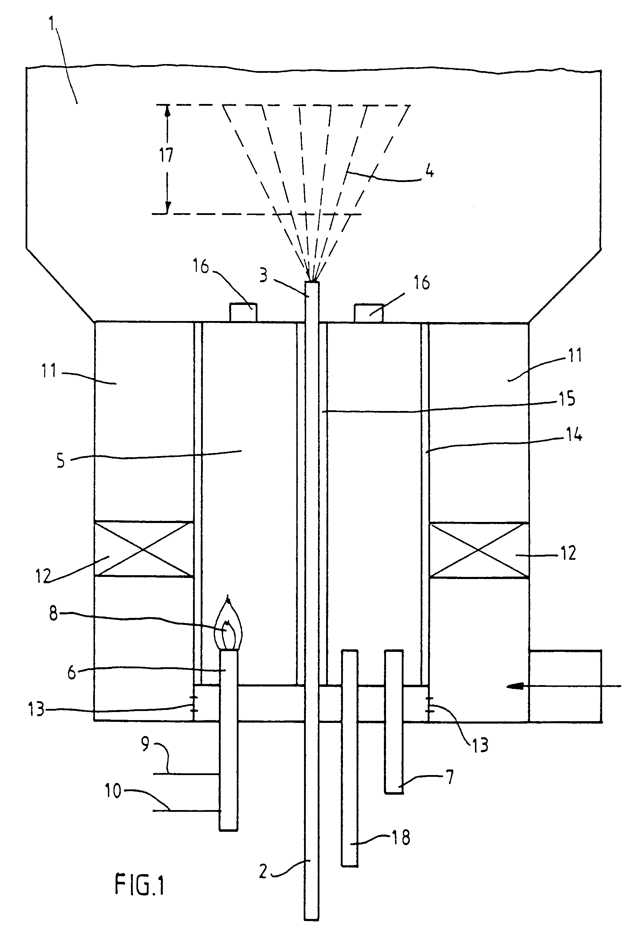

Gemäß Fig. 1 ist in der Achse einer Hauptbrennkammer 1 eine Zerstäuberlanze 2 angeordnet, die an ihrem Ende eine Zweistoffdüse 3 aufweist. Durch die Zerstäuberlanze 2 wird ein flüssiger Rückstand in die Hauptbrennkammer 1 eingedüst (Sprühkegel 4). Der Hauptbrennkammer 1 vorgeschaltet ist eine Erhitzerkammer 5. In die Erhitzerkammer 5 ragen, von außen gesehen, ein Leistungszündbrenner 6 und eine Lanze 7 für die Zuführung von Brenngas (z.B. Erdgas). Der Leistungszündbrenner 6 mit der Flamme 8 wird separat mit Luft 9 und Brenngas 10 gespeist. Die Zuführung der Verbrennungsluft zur Hauptbrennkammer 1 erfolgt durch einen konzentrisch um die Erhitzerkammer 5 angeordneten Ringkanal 11. Der Verbrennungsluft wird durch die eingebauten Drallerzeuger 12 ein Drall aufgeprägt. Ein geringer Teil der Verbrennungsluft strömt durch Bohrungen 13 an der Innenseite des Ringkanals 11 in einen äußeren Ringspalt 14 zwischen Erhitzerkammer 5 und Ringkanal 11 und einen inneren Ringspalt 15 zwischen Erhitzerkammer 5 und Zerstäuberlanze 2. Die Erhitzerkammer 5 weist an ihrem oberen Ende gleichmäßig über den Umfang verteilte, auf einem Kreis angeordnete Austrittsöffnungen für das in der Erhitzerkammer 5 gebildete Brenngas/Rauchgas-Gemisch auf. Dieses Gemisch wird im folgenden als "Zündgas" bezeichnet.

Die Inbetriebnahme des neuartigen Brenners erfolgt in der Weise, daß zunächst sauerstofffreies Reguliergas mit etwa gleichgroßem Volumenstrom wie das zu erhitzende Brenngas die Erhitzerkammer 5 durchströmt. Sodann wird der Leistungsbrenner 6 gezündet und die entstehenden Rauchgase werden durch die Öffnungen 16 in die Hauptbrennkammer 1 eingeleitet. Unter der Voraussetzung, daß die Temperatur dieser Rauchgase an den Austrittsöffnungen 16 über der Zündtemperatur des Brenngases liegt, wird das Brenngas über die Lanze 7 zugeführt und das Reguliergas entsprechend zurückgefahren. Die durch die Flamme 8 des Leistungsbrenners 6 erzeugten Rauchgase vermischen sich nun mit dem Brenngas und bilden, wie schon erwähnt, ein Zündgas, das durch die Öffnungen 16 in die Hauptbrennkammer 1 strömt. Die Leistung des Brenners 6 wird so bemessen, daß die Zündtemperatur des in die Hauptbrennkammer 1 eintretenden Zündgases mindestens 10 % über seiner Zündtemperatur liegt. Das Zündgas trifft in der Verdampfungs- und Zündzone 17 auf den Flüssigkeitssprühstrahl 4. In der gleichen Zone findet auch die Vermischung und thermische Reaktion mit der durch den Ringkanal 11 zugeführten sauerstoffhaltigen Verbrennungsluft statt. Dabei verdampft der verdüste Flüssigkeitsrückstand unter gleichzeitiger Zündung seiner brennbaren Anteile. Der Sprühkegel 4 der verdüsten Flüssigkeit wird von den aus den Öffnungen 16 austretenden Zündstrahlen und von dem in der Zündzone 17 erzeugten Flammenmantel konzentrisch eingehüllt. Eine weitere Verbesserung der Stabilisierung des Verbrennungsvorganges kann dadurch erreicht werden, daß die Anzahl der Zündstrahlen erhöht wird und/oder die Zündstrahlen zum Teil achsenparallel und zum Teil konvergierend austreten und/oder einen unterschiedlichen Durchmesser aufweisen.

Durch unterstöchiometrischen Betrieb des Leistungsbrenners 6 kann man erreichen, daß das Zündgas definierte CO-Anteile enthält. Dadurch wird die NOₓ-Bildung in der Zündzone 17 minimiert bzw. entstandenes NOₓ reduziert, so daß die NOₓ-Emissionsrate des Brenners allein aufgrund dieser Maßnahme drastisch gesenkt werden kann.

Durch die Lanze 18 kann der Erhitzerkammer 5 zusätzlich ein sauerstoffhaltiges oder auch ein sauerstofffreies Reguliergas zugeführt werden. Sinkt z.B. der Heizwert des zerstäubten Flüssigkeitsrückstandes dadurch, daß sein Wasseranteil ansteigt, so kann der erforderlich werdende höhere Brenngasdurchsatz dadurch auf der gleichen Temperatur gehalten werden, daß über die Lanze 18 eine geringe Menge Luft in die Erhitzerkammer 5 zugeführt wird. Entsprechend dem mit der Luft eingebrachten anteiligen Sauerstoff findet dann in der Erhitzerkammer 5 eine Wärmeentbindung statt, so daß das Zündgas die Erhitzerkammer 5 mit einer höheren Temperatur verläßt. Umgekehrt kann einem geringeren Brenngasdurchsatz, der einen Anstieg der Austrittstemperatur des Zündgases an den Austrittsöffnungen 16 zur Folge hat, eine Quenchung durch die Zugabe von Stickstoff durch die Lanze 18 erfolgen. Mit Hilfe des durch die Lanze 18 zugeführten Reguliergases kann man also die durchgesetzte Brenngasmenge bei konstanter Leistung des Leistungsbrenners 6 in weiten Grenzen variieren und an die Erfordernisse des Verbrennungsvorganges in der Hauptbrennkammer 1 anpassen. Die gleichen Überlegungen gelten auch für den CO-Anteil im Zündgas, das die Erhitzerkammer verläßt.

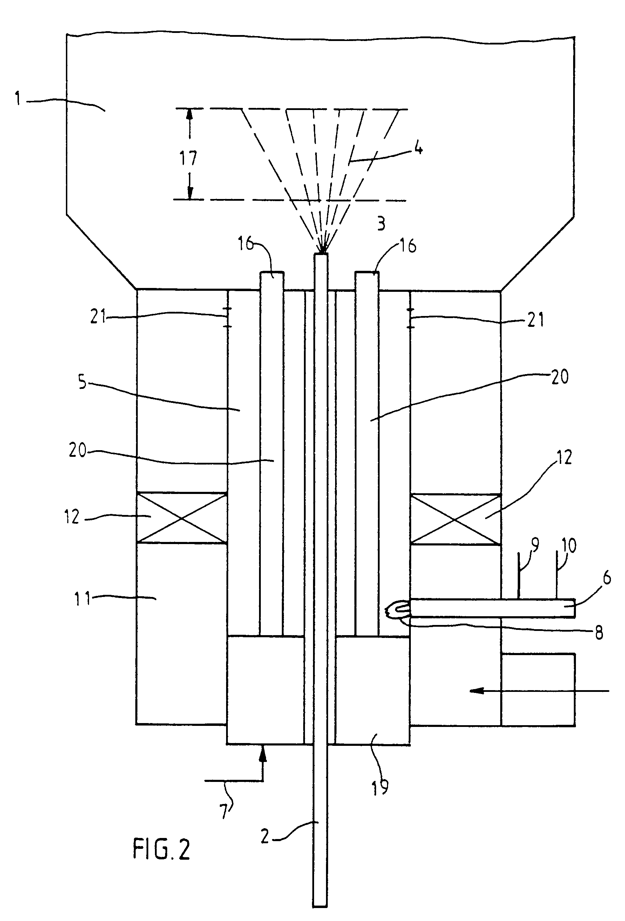

Fig. 2 zeigt eine abgewandelte Brennerkonstruktion. Im Gegensatz zu dem Brenner nach Fig. 1 wird hier das Zündgas nicht im direkten Kontakt mit den Rauchgasen eines Leistungsbrenners 6 vorgeheizt, sondern indirekt durch Wärmeaustausch in der Erhitzerkammer 5. Das zu erhitzende Brenngas gelangt hier zunächst in eine Verteilerkammer 19, durchströmt dann in Einzelrohren 20 die Erhitzerkammer 5 und tritt anschließend durch die Austrittsöffnungen 16 in gleicher Weise, wie oben beschrieben, in die Hauptbrennkammer 1 ein. Der Leistungsbrenner 6 in der Erhitzerkammer 5 ist hier seitlich angeflanscht. Durch die Öffnungen 21 im Ringkanal 11 tritt das Rauchgas des seitlich angeflanschten Zündbrenners 6 radial in die verdrallte Brennluft ein. Das vorgeheizte Brenngas (Erdgas) wird also bei dieser Ausführung nicht mit dem Rauchgas des Leistungszündbrenners 6 gemischt. Die Wärmeerzeugung für die Erhitzerkammer 5 könnte in diesem Fall aber auch auf andere Weise, z.B. durch eine elektrische Widerstandsheizung erfolgen. Im übrigen ist der Brenner analog zu der in Fig. 1 dargestellten Vorrichtung aufgebaut.

### Ausführungsbeispiel

Mit einer Zweistoffdüse 3 wurden in dem Brenner nach Fig. 1 800 l/h Wasser mit Hilfe von Stickstoff in Umgebungsluft zerstäubt. Die Zerstäuberlanze 2 mit 55 mm äußerem Durchmesser ragte dabei um 150 mm aus der ringförmigen Erhitzerkammer 5 heraus. Die Erhitzerkammer 5 wies einen äußeren Durchmesser von 230 mm auf und war stirnseitig zur Hauptbrennkammer 1 auf zwei Teilkreisen von 100 mm und 140 mm Durchmesser mit je sechs achsenparallelen Austrittsöffnungen 16 von 14 mm Durchmesser versehen. Zur direkten Erhitzung von 25 m³ /h Erdgas als Brenngas brannte ein mit λ = 0,7 unterstöchiometrisch betriebener Leistungsbrenner 6 in der Erhitzerkammer 5. Die Zündung des mit ca. 60 m/s aus den Austrittsöffnungen 16 austretenden Zündgases wurde einmal bei 960°C und ein anderes Mal bei 1.020°C eingeleitet. Die Eigenstabilität der aus der Erhitzerkammer 5 austretenden Zündstrahlen blieb bis 100°C unter der Zündtemperatur des Erdgases von 670°C erhalten.

## Patentansprüche

1. Verfahren zur Stabilisierung eines Verbrennungsvorganges, bei dem einer Flamme in einer Hauptbrennkammer neben dem Brenngas und der Verbrennungsluft flüssige oder gasförmige Rückstände mit geringem oder gar keinem Heizwert zugeführt werden, dadurch gekennzeichnet, daß das Brenngas vorgeheizt wird und mit einer Temperatur oberhalb seiner Zündtemperatur in die Hauptbrennkammer eintritt.

2. Verfahren nach Anspruch 1, dadurch gekennzeichnet, daß das Brenngas in einer Erhitzerkammer im direkten Kontakt mit einem darin angeordneten Brenner und den entstehenden Rauchgasen erhitzt wird und das Brenngas/Rauchgas-Gemisch als Zündgas der Hauptbrennkammer zugeführt wird.

3. Verfahren nach Anspruch 1, dadurch gekennzeichnet, daß das Brenngas durch einen mit einer Erhitzerkammer verbundenen Wärmetauscher geleitet und vorgeheizt wird.

4. Verfahren nach Ansprüchen 1 bis 3, dadurch gekennzeichnet, daß flüssige Rückstände mittels einer Zweistoffdüse in die Flamme der Hauptbrennkammer eingedüst werden und das Brenngas oder das Brenngas/Rauchgas-Gemisch in Form von gerichteten Zündstrahlen in die Verdüsungszone des Rückstandes eingeleitet wird.

5. Verfahren nach Anspruch 4, dadurch gekennzeichnet, daß die verdüste Flüssigkeit von den Zündstrahlen konzentrisch eingehüllt wird.

6. Verfahren nach Anspruch 1, dadurch gekennzeichnet, daß der Brenner in der Erhitzerkammer unterstöchiometrisch betrieben wird, so daß das Brenngas oder das Brenngas/Rauchgas-Gemisch Kohlenmonoxid enthält.

7. Verfahren nach Ansprüchen 1 bis 6, dadurch gekennzeichnet, daß das Brenngas oder das Brenngas/Rauchgas-Gemisch vor dem Eintritt in die Hauptbrennkammer katalytisch unter Abspaltung von Wasserstoff zersetzt wird.

8. Verfahren nach Ansprüchen 1 bis 7, dadurch gekennzeichnet, daß zusätzlich ein sauerstoffhaltiges oder sauerstofffreies, nicht brennbares Reguliergas in die Erhitzerkammer eingespeist wird.

## Claims

1. Method of stabilizing a combustion process in which a flame in a main combustion chamber is supplied with liquid or gaseous residues having little or no calorific value in addition to the fuel gas and the air for combustion, characterised in that the fuel gas is preheated and enters the main combustion chamber at a temperature above its ignition temperature.

2. Method according to claim 1, characterised in that the fuel gas is heated in a heating chamber in direct contact with a burner arranged therein and the flue gases produced, and the mixture of fuel gas and flue gas is supplied to the main combustion chamber as ignition gas.

3. Method according to claim 1, characterised in that the fuel gas is passed through a heat exchanger connected with a heating chamber and is preheated.

4. Method according to claims 1 to 3, characterised in that liquid residues are injected into the flame of the main combustion chamber by means of a two-component nozzle and the fuel gas or mixture of fuel gas and flue gas is introduced into the atomization zone of the residue in the form of directed ignition jets.

5. Method according to claim 4, characterised in that the atomized liquid is concentrically enveloped by the ignition jets.

6. Method according to claim 1, characterised in that the burner is operated substoichiometrically in the heating chamber so that the fuel gas or mixture of fuel gas and flue gas contains carbon monoxide.

7. Method according to claims 1 to 6, characterised in that the fuel gas or mixture of fuel gas and flue gas is catalytically decomposed with liberation of hydrogen before its entry into the main combustion chamber.

8. Method according to claims 1 to 7, characterised in that a non-combustible regulating gas containing or free from oxygen is in addition introduced into the heating chamber.

## Revendications

1. Procédé de stabilisation d'un processus de combustion, dans lequel une flamme dans une chambre de combustion principale est alimentée non seulement en gaz combustible et en air de combustion mais également en résidus liquides ou gazeux de faible pouvoir calorifique, voire même sans pouvoir calorifique, caractérisé en ce que le gaz combustible est préchauffé et pénètre dans la chambre de combustion principale à une température supérieure à sa température d'allumage.

2. Procédé selon la revendication 1, caractérisé en ce que le gaz combustible est préchauffé dans une chambre de préchauffage par contact direct avec un brûleur qui y est disposé et par les gaz de fumées résultants et que le mélange des gaz combustibles et des gaz de fumées est introduit dans le chambre de combustion principale comme gaz d'allumage.

3. Procédé selon la revendication 1, caractérisé en ce que le gaz d'allumage est amené dans un échangeur de chaleur connecté à une chambre de préchauffage et y est préchauffé.

4. Procédé selon les revendications 1 à 3, caractérisé en ce que les résidus liquides sont pulvérisés au moyen d'une tuyère à deux composants dans la flamme de la chambre de combustion principale, et que le gaz combustible ou le mélange de gaz combustible et de gaz de fumées est introduit sous forme de jet d'allumage orienté dans la zone de pulvérisation des résidus.

5. Procédé selon la revendication 4, caractérisé en ce que le liquide pulvérisé est entouré concentriquement par les jets d'allumage.

6. Procédé selon la revendication 1, caractérisé en ce que le brûleur dans la chambre de préchauffage est alimenté en proportions inférieures à la valeur stoechiométrique, si bien que le gaz combustible ou le mélange de gaz combustible et de gaz de fumées contient du monoxyde de carbone.

7. Procédé selon les revendications 1 à 6, caractérisé en ce que le gaz combustible ou le mélange de gaz combustible et de gaz de fumées est décomposé catalytiquement avec dégagement d'hydrogène avant son entrée dans la chambre de combustion principale.

8. Procédé selon les revendications 1 à 7, caractérisé en ce qu'un gaz de régulation non combustible contenant de l'oxygène ou exempt d'oxygène est introduit en outre dans la chambre de préchauffage.
